Europäisches Patentamt

European Patent Office

Office européen des brevets

(19)

(11) **EP 0 997 000 B1**

(12) **EUROPÄISCHE PATENTSCHRIFT**

(45) Veröffentlichungstag und Bekanntmachung des Hinweises auf die Patenterteilung:
**13.08.2003   Patentblatt 2003/33**

(21) Anmeldenummer: **98966611.0**

(22) Anmeldetag: **10.12.1998**

(51) Int Cl.$^{7}$: **H03K 3/84**

(86) Internationale Anmeldenummer:
**PCT/EP98/08057**

(87) Internationale Veröffentlichungsnummer:
**WO 99/039434 (05.08.1999 Gazette 1999/31)**

(54) **VERFAHREN UND ANORDNUNG ZUR ERZEUGUNG BINÄRER SEQUENZEN VON ZUFALLSZAHLEN**

METHOD AND ARRANGEMENT FOR GENERATING BINARY SEQUENCES OF RANDOM NUMBERS

PROCEDE ET SYSTEME POUR PRODUIRE DES SEQUENCES BINAIRES DE NOMBRES ALEATOIRES

(84) Benannte Vertragsstaaten:
**AT BE CH DE FI FR GB IT LI NL SE**

(30) Priorität: **02.02.1998   DE 19806178**

(43) Veröffentlichungstag der Anmeldung:
**03.05.2000   Patentblatt 2000/18**

(73) Patentinhaber: **Deutsche Telekom AG**
**53113 Bonn (DE)**

(72) Erfinder:
- **DULTZ, Wolfgang**
  **D-65936 Frankfurt am Main (DE)**
- **DULTZ, Gisela**
  **D-65396 Frankfurt am Main (DE)**
- **HILDEBRANDT, Eric**
  **D-60487 Frankfurt am Main (DE)**
- **SCHMITZER, Heidrun**
  **D-93051 Regensburg (DE)**

(56) Entgegenhaltungen:
**US-A- 4 687 935**

- **RARITY J G ET AL: "QUANTUM RANDOM-NUMBER GENERATION AND KEY SHARING" JOURNAL OF MODERN OPTICS, Bd. 41, Nr. 12, Dezember 1994, Seiten 2435-2444, XP002052913 in der Anmeldung erwähnt**
- **TAKEUCHI S ET AL: "HIGH PERFORMANCE RANDOM PULSER BASED ON PHOTON COUNTING" IEEE TRANSACTIONS ON NUCLEAR SCIENCE, Bd. NS-33, Nr. 1, Februar 1986, Seiten 946-949, XP002022448**
- **DATABASE INSPEC INSTITUTE OF ELECTRICAL ENGINEERS, STEVENAGE, GB Inspec No. 3095523, TANG QING ET AL: "Monte Carlo calculation for random numbers produced by an optical method" XP002098144 & WULI, JUNE 1987, CHINA, Bd. 16, Nr. 6, Seiten 349-352, ISSN 0379-4148**

# EP 0 997 000 B1

**Beschreibung**

Die Erfindung betrifft ein Verfahren und eine Anordnung zur Erzeugung binärer Sequenzen von Zufallszahlen. Zufallszahlen werden bei der mathematischen Simulation zufälliger Prozesse, bei der Stichprobenerhebung und besonders in der Kryptologie verwendet. Durch die zunehmend hochbitratige, digitale Kommunikation über öffentlich zugängliche Nachrichtenkanäle ist die Gewährleistung der Geheimhaltung und der Authentizität der übertragenen Information zu einem zentralen Problem geworden. Gute kryptographische Schlüssel sind Sequenzen von binären Zufallszahlen. Zur sicheren Verschlüsselung wird vorzugsweise ein zufälliger Schlüssel dieser Art gewählt, der so lang wie die Nachricht selbst ist und nur ein einziges Mal Verwendung findet.

Zur Erzeugung von Zufallszahlen stehen im Wesentlichen zwei verschiedenartige Möglichkeiten zur Verfügung:

1. durch mathematische Algorithmen generierte Pseudo-Zufallszahlen Echte Zufallszahlen lassen sich in einem Rechner, der ja vollständig deterministisch arbeitet, grundsätzlich nicht erzeugen. Die durch mathematische Algorithmen generierten Zufallszahlen, die viele Programme zur Verfügung stellen, sind daher nie wirklich zu-fällig. Eine Verbesserung stellen die sogenannten Pseudozufallszahlen dar, die aus einem kürzeren echt zufälligen Keim entwickelt werden.

In jedem Fall ist jedoch bei der Generierung von Pseudozufallszahlen nach den o.g. Verfahrensweisen mit einer gewissen Anzahl, von vorne herein unbrauchbarer Sequenzen (schwache Schlüssel) und auf jeden Fall mit seltsamen Korrelationen zu rechnen.

2. Zufallszahlen, die auf physikalischen Verfahren basieren
Bei diesen Verfahren wird der statistische Charakter bestimmter physikalischer Prozesse genutzt.

Auch bei den physikalischen Verfahren gibt es solche, die zwar im Grunde deterministisch, aber dabei so komplex sind, daß sie nicht reproduziert werden können. Dazu gehören etwa der Münzwurf "Kopf" oder "Zahl", oder die Lottomaschinen. Diese Verfahren produzieren ein deterministisches Chaos, das als zufällig gelten kann, da die Anfangsbedingungen des Generators bei der Erzeugung jeder einzelnen Zufallszahl stets etwas voneinander abweichen, ohne daß diese Abweichung quantifizierbar wird.
Zu den physikalischen Verfahren gehören auch Elementarprozesse wie sie beispielsweise in der Quantenmechanik vorkommen. Derartige Prozesse sind von ihrer Natur her grundsätzlich zufällig. Zufallszahlen, die durch physikalische Prozesse erzeugt werden, kommen daher dem Konzept einer zufälligen Sequenz näher als algorithmisch generierte Zufallszahlen.

Bekannt ist eine Lösung, die den natürlichen Quantenprozeß des elektromagnetischen Rauschens eines Widerstandes oder einer Diode zur Erzeugung von zufälligen Bitsequenzen nutzt (siehe Manfred Richter: Ein Rauschgenerator zur Gewinnung von quasiidealen Zufallszahlen für die stochastische Simulation, Dissertation RWTH Aachen; 1992).
Derartige Verfahren können jedoch von außen dadurch manipuliert werden, daß dem Quantenrauschen ein willkürlich vorgegebenes "Rauschen" etwa durch Einstrahlung elektromagnetischer Wellen überlagert wird. Da die Trennung des Quantenrauschens von diesem fremdbestimmten Pseudorauschen nicht einfach ist, gelten derartige Verfahren als nicht sicher.

Desweiteren sind Verfahren zur Generierung von Zufallszahlen bekannt, die auf radioaktiven Zerfallsprozessen basieren (siehe Martin Gude: "Ein quasi-idealer Gleichverteilungsgenerator basierend auf physikalischen Zufallsphänomenen";Dissertation RWTH Aachen 1987). Dieses Verfahren eignet sich aufgrund der hohen Energie der entstehenden Teilchen sehr gut um Zufallssequenzen zu erzeugen, allerdings bestehen neben den wirklich vorhandenen Gefahren, die insbesondere auf der potentiell schädlichen Wirkung radioaktiver Strahlung auf den Menschen beruhen, bei einem Teil der Bevölkerung irrationale Vorbehalte gegenüber der Radioaktivität, so daß radioaktive Prozesse nicht ohne weiteres zur Zufallserzeugung verwendet werden können.

Ein weiteres bekanntes Verfahren zur Erzeugung von Zufallssequenzen basiert auf dem Prozess der Wegwahl einzelner Photonen am Strahlteiler (siehe J.G. Rarity et al.: "Quantum random-number Generation and key sharing" ; J. Mod. Opt. 41, S.2435 1994)
Bei diesem Verfahren wird als Quelle für die Zufallsbinärfolge eine Schwache Lichtquelle vorgesehen. Ein Lichtquant wird z. B. an einem halbdurchlässigen Spiegel reflektiert oder transmittiert; zwei Detektoren registrieren das Lichtquant und ihre Anzeigen repräsentieren die "0" oder die "1" der Zufallssequenz.

Der Erfindung liegt die Aufgabe zugrunde, ein Verfahren und eine Anordnung zur Erzeugung binärer Sequenzen von Zufallszahlen bereitzustellen, durch die die oben beschriebenen Nachteile vermieden werden. Die Lösung soll dabei kostengünstiger als die bekannten Lösungen sein und sich ohne großen Aufwand auf eine Chipkarte integrieren lassen.
Die Aufgabe wird erfindungsgemäß durch die Gesamtheit der Merkmale des 1. Patentanspruchs gelöst. Vorteilhafte Ausgestaltungen und Weiterbildungen ergeben sich aus den Unteransprüchen.

Die erfindungsgemäße Lösung basiert auf dem bekannten Prinzip der Wegwahl einzelner Photonen an einem Strahlteiler. Bei der erfindungsgemäßen Lösung wird ein optischer Strahlteiler, z. B. ein halbdurchlässiger Spiegel verwendet, auf den ultraviolettes, sichtbares oder infrarotes Licht fällt. Zwei Detektoren, die einzelne Photonen erkennen können, registrieren die Photonen und definieren über die ihnen zugeordneten Anzeigen die "0" oder die "1" der Zufallssequenz und damit die Zufallsfolge.

Bei dem erfindungsgemäßen Verfahren wird als Lichtquelle L anstatt der bisher üblichen Photonenquelle, wie beispielsweise eine abgeschwächte Laserstrahlquelle, eine Photonenquelle geringerer Leistung und damit auch geringerer Abmessung eingesetzt. Geeignet sind beispielsweise abgeschwächte Laserdioden, normale Dioden (LEDs), thermische Lichtquellen wie Halogenlampen, Spektrallampen oder Quetschlichtquellen. Desweiteren wurde erfindungsgemäß vor dem zweiten Strahlteiler ST2 ein erster Strahlteiler ST1, vorzugsweise ein Triggerstrahlteiler, in den Strahlgang der Lichtquelle L eingefügt. Die entsprechend dem Zufallsprinzip von der Lichtquelle L während einer vorgegebenen Meßzeit emittierten Photonen/Photonenschwärme werden dabei durch die im Strahlgang der Lichtquelle L angeordneten Strahlteiler ST1 und ST2 aufgeteilt und entsprechend der Aufteilung über die den Strahlteilern ST1 und ST2 nachgeordneten Detektoren (Triggerdetektor DT für Strahlteiler ST1 und die Detektoren $D1_0$ und $D2_1$ für den Strahlteiler ST2) erfaßt.

Die Detektoren DT, $D1_0$ und $D2_1$ sind mit der Erfassungseinrichtung E verbunden.,

Eine Zufallszahl wird nur erzeugt, wenn die an den einzelnen Detektoren DT, $D1_0$ und $D2_1$ registrierten Photonen in ihrer Gesamtheit einem vorher festgelegten Photonenzahlschema entsprechen, welches in den Rechner der Erfassungseinrichtung eingegeben wurde.

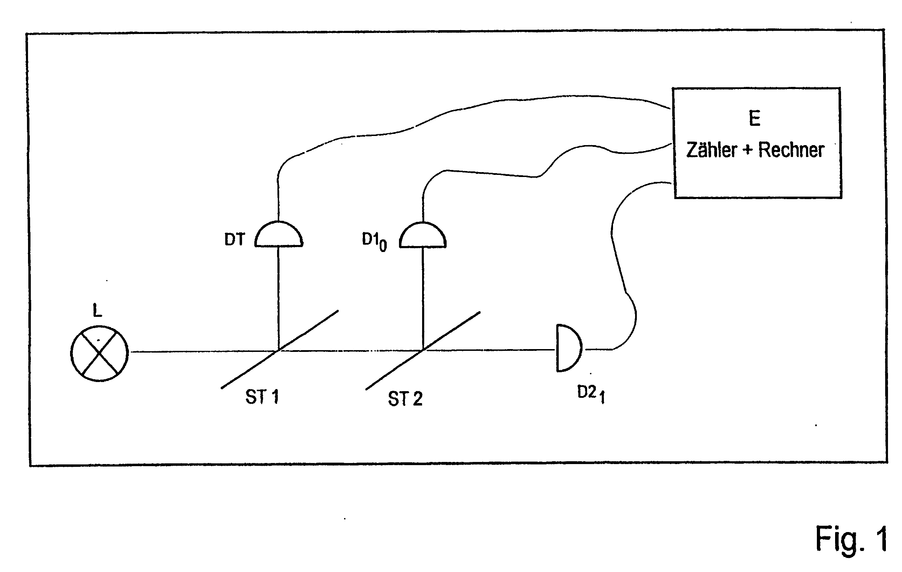

Die mathematischen Grundlagen sowie die möglichen Ausführungsformen der erfindungsgemäßen Lösung werden nachfolgend anhand von Figur1 näher erläutert.

Als Lichtquelle L wird eine Lichtquelle gewählt, bei der Lichtintensität derart schwach ausgebildet ist, daß sie einzelne Photonen oder aber stets mit einer gewissen Wahrscheinlichkeit auch Photonenschwärme aus n Photonen aussendet. Diese Photonenschwärme werden dann in den Detektoren DT, $D1_0$ und $D2_1$ entweder aufgelöst oder als ganzes als Einzelergebnis gezählt. Die Wahrscheinlichkeit $p_n$, daß am Detektor gleichzeitig n Photonen auftreten oder als Einzelereignis gezählt werden, wird durch die Poissonverteilung beschrieben.

$$p_n = \frac{\bar{n}^n}{n!} e^{-\bar{n}} \qquad (1)$$

$\bar{n}$ ist die mittlere Zahl der Photonen pro Meßzeit am Detektor. Obwohl die Statistik der Lichtquelle für thermisches Licht (Halogenlampe), chaotisches Licht (Spektrallinie) oder Laserlicht verschieden ist, gilt Gleichung (1) für alle diese Lichtquellen, solange die Kohärenzzeit einer thermischen oder chaotischen Quelle kurz im Vergleich zu Meßzeit des Detektors ist. Für Laserlicht gilt immer die Gleichung (1). Beim einfachen Strahlteiler mit zwei Detektoren, wie er durch den Strahlteiler ST2 und die Detektoren $D1_0$ und $D2_1$ in Fig. 1 abgebildet ist, wird die Elektronik der Zählvorgänge so eingerichtet, daß ein Ergebnis immer nur dann gezählt wird, wenn nur einer der Detektoren $D1_0$ oder $D2_1$ anspricht. Sprechen beide Detektoren $D1_0$ und $D2_1$ innerhalb der Meßzeit an, so wird das Zählereignis verworfen. Wird ein Schwarm von Photonen am Strahlteiler ST2 aufgeteilt, so wird das Ereignis nicht gewertet. Gewertet wird ein Zählereignis nur, wenn der Schwarm völlig in den einen Detektor $D1_0$ oder völlig in den anderen Detektor $D2_1$ gelangt und gezählt wird. Bei einem Schwarm von n Photonen bedeutet dies, daß nur 2 von n+1 Ereignissen gezählt werden, und Gleichung (1) ist daher noch mit $\frac{2}{n+1}$ zu multiplizieren, um die Wahrscheinlichkeit zu beschreiben, mit der Zählereignisse bei einem Photonenschwarm auftreten. Also:

Die Wahrscheinlichkeit $p_n$, daß bei einer mittleren Photonenzahl $\bar{n}$ ein brauchbares Zählereignis auftritt, beträgt für den einfachen Strahlteiler, entsprechend Strahlteiler ST2, und einer der oben beschriebenen Lichtquellen L geringer Leistung

$$p_n^{(1)} = \frac{\bar{n}^n}{n!} e^{-\bar{n}} \cdot \frac{2}{n+1} \quad \text{einfacher Strahlteiler} \qquad (2)$$

Erfindungsgemäß wird dem einfachen Strahlteiler ST2 ein weiterer Strahlteiler Stl, vorzugsweise ein Triggerstrahlteiler, vorschaltet (Fig. 1). Wie im ersten Fall sind die Zählelektroniken der beiden Detektoren $D1_0$ und $D2_1$ so geschaltet, daß eine Zufallszahl nur dann bestimmt wird, wenn nur der eine oder nur der andere Detektor $D1_0$ oder $D2_1$ anspricht. Außerdem darf in diesem Fall aber der Triggerdetektor DT des Strahlteilers ST1 nicht ansprechen. Laufzeiteffekte zwischen dem Triggerdetektor DT des ersten Strahlteilers ST1 und den Detektoren $D1_0$ und $D2_1$ des zweiten Strahlteiler ST2 werden optisch oder elektronisch ausgeglichen. Tritt ein Schwarm von n Photonen auf, und gelangt wenigsten 1 Photon des Schwarmes in den Triggerdetektor DT, wird das Ereignis nicht gezählt. Nur wenn kein Photon über den ersten Strahlteiler ST1 zum Triggerdetektor DT gelangt und außerdem am zweiten Strahlteiler ST2 alle n Photonen vollständig, entweder in den Detektor $D1_0$, oder in den Detektor $D2_1$ gelangen, wird ein Ergebnis als (0) oder (1) gezählt. Die Wahrscheinlichkeit, daß kein Photon des Schwarmes zum Triggerdetektor DT gelangt und der Rest völlig zu einem der Detektoren $D1_0$ oder $D2_1$, beträgt 4/((n+1)(n+2)), d. h. die Wahrscheinlichkeit $p_n^{(2)}$, daß bei einem Schwarm von n Photonen ein Zählereignis auftritt, beträgt

$$p_n^{(2)} = \frac{\overline{n}^n}{n!} e^{-\overline{n}} \cdot \frac{4}{(n+1)(n+2)} \qquad \text{Strahlteiler ST2 mit vorgeschaltetem} \qquad (3)$$

$$\text{Strahlteiler ST1}$$

Die Gleichung (3) gilt für den Fall, daß der Strahlteiler ST1 das Teilungsverhältnis 1/3 : 2/3, der Strahlteiler ST2 aber das Teilungsverhältnis 1/2 : 1/2 hat In diesem Fall werden die drei Detektoren DT; $D1_0$; $D2_1$ gleich gewichtet. Andere Teilungsverhältnisse sind möglich, verändern aber die Wahrscheinlichkeiten nach Gleichung (3).

Das hier angewendete Verfahren macht es also mit zunehmender Anzahl n der während einer vorgegebenen Meßzeit emittierten Photonen immer unwahrscheinlicher, daß ein n-Photonenschwarm zu einem Zählereignis und damit zu einer Zufallszahl führt. Aber die Wahrscheinlichkeit nimmt zu, daß der quantenmechanisch ideale Fall eintritt: nämlich die Erzeugung des Zufalls durch ein einzelnes Photon am Strahlteiler. Die Mehrphotonenereignisse, die im Grenzfall großer n in den klassischen Zustand übergehen, werden unterdrückt. Damit können erfindungsgemäß schwache Laser, chaotische oder thermische Lichtquellen zur Zufallserzeugung herangezogen werden.

Denkbar ist auch die Anordnung von mehr als einem Triggerstrahlteiler, in den Strahlgang zwischen Lichtquelle L und Strahlteiler ST2. Die Triggerdetektoren dieser zusätzlichen Triggerstrahlteiler sind ebenfalls mit der Erfassungseinrichtung E verbunden. Bei einer derartigen Ausführungsform werden die während der vorgegeben Meßzeit detektierten Photonen, entsprechend ihrer Zuordnung zu den einzelnen Triggerstrahlteilern (einschließlich Strahlteiler ST2), in der Erfassungseirichtung registriert und ebenfalls mit einem vorher festgelegten, in der Erfassungseinrichtung E gespeicherten Photonenschema verglichen. Bei einer solchen Ausführungsform werden Photonenschwärme noch stärker unterdrückt. Zufallsereignisse werden beispielsweise nur registriert, wenn keiner der Triggerdetektoren anspricht.

Auch ein anderes festgelegtes oder variabel veränderbares Photonenschema kann bei einer Ausführungsform mit mehreren Triggerdetektoren im Strahlgang der Lichtquelle L vorgegeben werden. Das Photonenschema kann beispielsweise beinhalten, daß der Triggerdetektor jedes zweiten Triggerstrahlteilers ansprechen muß, oder daß nur der Triggerdetektor des ersten und des siebten Triggerstrahlteilers ansprechen muß. In jedem dieser Fälle wird die Zählwahrscheinlichkeit für den Photonenschwarm vermindert.

Ein interessantes Beispiel ist eine Anordnung nach Fig.1, bei der Zufallsereignisse am zweiten Strahlteiler ST2 nur gezählt werden, wenn ein oder mehrere Photonen durch den Triggerdetektor DT des Strahlteilers ST1 registriert werden. In diesem Fall werden Schwärme mit nur <u>einem</u> Photon gar nicht für die Zufallserzeugung verwendet. Da die heutigen Detektoren auch recht unangenehme Eigenschaften, wie geringe Quanteneffizienz und Totzeiten haben, handelt man sich mit weiteren zusätzlichen Triggerstrahlteilern auch zusätzliche elektronische Schwierigkeiten und Kosten ein. In der Praxis wird also vorzugsweise nur ein zusätzlicher Triggerstrahlteiler eingesetzt werden.

**Bezugszeichenaufstellung:**

L       Lichtquelle
ST1    erster Strahlteiler (Triggerstrahlteiler)
ST2    zweiter Strahlteiler
E       Erfassungseinrichtung
DT     Triggerdetektor des ersten Strahlteilers

$D1_0$ I
I       Detektoren des zweiten Strahlteilers
$D2_1$ I
n       Anzahl der während einer vorgegebenen Meßzeit durch die Lichtquelle emittierten Photonen

**Patentansprüche**

1. Verfahren zur Erzeugung binärer Sequenzen von Zufallszahlen, welches auf dem Prinzip der zufälligen Wegwahl von Photonen an einem Strahlteiler und der Generierung einer Zufallszahl mittels zwei einem Strahlteiler nachgeordneten Detektoren beruht, und bei dem die Zählelektroniken der beiden Detektoren so geschaltet sind, daß eine Zufallszahl dann generiert wird, wenn nur einer der Detektoren anspricht, wobei
die von einer als Lichtquelle (L) geringer Leistung ausgebildeten Photonenquelle entsprechend dem Zufallsprinzip während einer vorgegebenen Meßzeit emittierten Photonen/Photonenschwärme durch mindestens zwei nacheinander im Strahlgang der Lichtquelle (L) angeordnete Strahlteiler (ST1;ST2) aufgeteilt und entsprechend der Aufteilung über die den Strahlteilern (ST1;ST2) nachgeordneten, mit der Erfassungseinrichtung (E) verbundenen Detektoren (DT;$D1_0$,$D2_1$) erfaßt werden, und wobei eine Zufallszahl nur erzeugt wird, wenn die an den einzelnen Detektoren (DT;$D1_0$,$D2_1$) registrierten Photonen in ihrer Gesamtheit einem vorher festgelegten Photonenschema entsprechen.

2. Verfahren nach Anspruch 1, **dadurch gekennzeichnet, daß** bei zwei nacheinander im Strahlgang der Lichtquelle (L) angeordneten Strahlteilern (ST1;ST2) das der Erzeugung der Zufallszahl zugrunde liegende Photonenzahlschema darauf beruht, daß eine Zufallszahl nur erzeugt wird, wenn während der vorgegebenen Meßzeit am Triggerdetektor (DT) des ersten Strahlteilers (ST1) kein Photon und nur an einem der dem zweiten Strahlteiler (ST2) nachgeordneten Detektoren ($D1_0$) bzw. ($D2_1$) mindestens ein Photon registriert wird.

3. Verfahren nach Anspruch 1, **dadurch gekennzeichnet, daß** bei zwei nacheinander im Strahlgang der Lichtquelle angeordneten Strahlteilern (ST1;ST2) das der Erzeugung der Zufallszahl zugrunde liegende Photonenzahlschema darauf beruht, daß eine Zufallszahl nur erzeugt wird, wenn während der vorgegebenen Meßzeit am Detektor (DT) des ersten Strahlteilers (ST1) mindestens ein Photon und nur an einem der dem zweiten Strahlteiler (ST2) nachgeordneten zwei Detektoren ($D1_0$) bzw. ($D2_1$) mindestens ein Photon registriert wird.

4. Verfahren nach Anspruch 1, **dadurch gekennzeichnet, daß** für den Fall, daß mehr als zwei Triggerstrahlteiler im Strahlgang zwischen der Lichtquelle (L) und dem Strahlteiler (ST2) angeordnet sind, das Photonenschema mathematisch so ausgebildet ist, daß eine Zufallszahl nur erzeugt wird, wenn ein Photonenschwarm mit einer durch das vorgegebene Photonenschema definierten Anzahl von Photonen an den Detektoren des Strahlteilers (ST2) und den Triggerdetektoren der zusätzlichen Triggerstahlteiler auftritt.

5. Anordnung zur Erzeugung binärer Sequenzen von Zufallszahlen, umfassend

   - eine als Photonenquelle ausgebildete Lichtquelle,
   - einen der Lichtquelle nachgeordneten Strahlteiler mit zwei dem Strahlteiler nach geordneten Detektoren und
   - eine den Detektoren nachgeordnete, aus Zähler und Rechner bestehende Erfassungseinrichtung zur Generierung der Zufallszahlen, wobei

   als Photonenquelle eine Lichtquelle (L) geringer Leistung eingesetzt wird, aus der entsprechend dem Zufallsprinzip sowohl einzelne Photonen als auch Photonenschwärme austreten können, und wobei zwischen der Lichtquelle (L) und dem im Strahlgang der Lichtquelle (L) angeordnetem Strahlteiler (ST2) mindestens ein weiterer Strahlteiler, vorzugsweise ein Triggerstrahlteiler (ST1), im Strahlgang angeordnet ist, welcher über einen Detektor, vorzugsweise einen Triggerdetektor (DT), mit der Erfassungseinrichtung (E) verbunden ist.

6. Anordnung nach Anspruch 5, **dadurch gekennzeichnet, daß** als Lichtquelle (L) ein abgeschwächter Laser verwendet wird.

7. Anordnung nach Anspruch 5, **dadurch gekennzeichnet, daß** als Lichtquelle (L) eine thermische Lichtquelle verwendet wird.

8. Anordnung nach Anspruch 5, **dadurch gekennzeichnet, daß** als Lichtquelle (L) eine Spektrallampe verwendet wird.

9. Anordnung nach Anspruch 5, **dadurch gekennzeichnet, daß** als Lichtquelle (L) eine Leuchtdiode verwendet wird.

10. Anordnung nach Anspruch 4, **dadurch gekennzeichnet, daß** als Lichtquelle (L) eine Quetschlichtquelle verwendet wird.

**Claims**

1. Method for generating binary sequences of random numbers, said method being based on the principle of the random path selection of photons at a beam splitter and the generation of a random number by means of two detectors positioned after a beam splitter, and in which the counting electronics of the two detectors are configured such that a random number is generated when only one of the detectors responds, wherein
the photons/photon swarms emitted according to the random principle during a predetermined measuring time by a photon source in the form of by a light source (L) of low power are split up by at least two beam splitters (ST1; ST2) arranged one after the other in the optical path of the light source (L) and are detected according to the split by the detectors (DT; $D1_0$, $D2_1$) positioned after the beam splitters (ST1; ST2) and connected to the detecting means (E), wherein a random number is generated only if the photons registered at the individual detectors (DT; $D1_0$, $D2_1$) correspond in their totality to a previously determined photon scheme.

2. Method according to claim 1, **characterized in that**, in the case of two beam splitters (ST1; ST2) arranged one after the other in the optical path of the light source (L), the photon number scheme underlying the generation of the random number is based on a random number being generated only if, during the predetermined measuring time, no photon is registered at the trigger detector (DT) of the first beam splitter (ST1) and at least one photon is registered at only one of the detectors ($D1_0$) positioned after the second beam splitter (ST2).

3. Method according to claim 1, **characterized in that**, in the case of two beam splitters (ST1; ST2) arranged one after the other in the optical path of the light source, the photon number scheme underlying the generation of the random number is based on a random number being generated only if, during the predetermined measuring time, at least one photon is registered at the detector (DT) of the first beam splitter (ST1) and at least one photon is registered at only one of the two detectors ($D1_0$) and ($D2_1$) positioned after the second beam splitter (ST2).

4. Method according to claim 1, **characterized in that**, in the event that more than two trigger beam splitters are arranged in the optical path between the light source (L) and the beam splitter (ST2), the photon scheme is mathematically formed such that a random number is generated only if a photon swarm with a number of photons defined by the predetermined photon scheme occurs at the detectors of the beam splitter (ST2) and at the trigger detectors of the additional trigger beam splitters.

5. Arrangement for generating binary sequences of random numbers, comprising

   - a light source in the form of a photon source;
   - a beam splitter positioned after the light source with two detectors positioned after the beam splitter and
   - a detecting means, positioned after the detectors and consisting of counter and processor, for generating the random numbers, wherein

   used as the photon source is a light source (L) of low power from which both individual photons and also photon swarms are able to escape according to the random principle, wherein arranged in the optical path between the light source (L) and the beam splitter (ST2) arranged in the optical path of the light source (L) is at least one further beam splitter, preferably a trigger beam splitter (ST1), which is connected to the detecting means (E) through the intermediary of a detector, preferably a trigger detector (DT).

6. Arrangement according to claim 5, **characterized in that** an attenuated laser is used as the light source (L).

7. Arrangement according to claim 5, **characterized in that** a thermal light source is used as the light source (L).

8. Arrangement according to claim 5, **characterized in that** a spectral lamp is used as the light source (L).

9. Arrangement according to claim 5, **characterized in that** a light-emitting diode is used as the light source (L).

10. Arrangement according to claim 4, **characterized in that** a squeezed light source is used as the light source (L).

**Revendications**

1. Procédé pour la production de séquences binaires de nombres aléatoires reposant sur le principe du choix du chemin aléatoire de photons sur une lame séparatrice et de la génération d'un nombre aléatoire au moyen de deux détecteurs placés en aval d'une lame séparatrice et dans lequel les électroniques de comptage des deux détecteurs sont commutées de manière à générer un nombre aléatoire lorsqu'un seul des détecteurs répond, les photons/les essaims de photons émis, selon le principe aléatoire, pendant un temps de mesure donné, par une source de photons configurée comme source lumineuse (L) de faible puissance étant répartis par aux moins deux lames séparatrices (ST1 ; ST2) placées l'une après l'autre dans le passage de la source lumineuse (L) et détectés, conformément à la répartition au moyen de détecteurs (DT ; $D1_0$, $D2_1$) placés après les lames séparatrices (ST1 ; ST2) et reliés au dispositif de détection (E) et un nombre aléatoire n'étant généré que si les photons enregistrés sur les différents détecteurs (DT ; $D1_0$, $D2_1$) correspondent en totalité à un schéma de photons défini au préalable.

2. Procédé selon revendication 1, **caractérisé en ce qu'**en présence de deux lames séparatrices (ST1;ST2) placées l'une derrière l'autre dans le passage de la source lumineuse (L), le nombre de photons s'appuyant sur la génération du nombre aléatoire repose sur le fait qu'un nombre aléatoire n'est généré que si, pendant le temps de mesure donné, aucun photon n'est enregistré sur le détecteur asservi (DT) de la première lame séparatrice (ST1) et au moins un photon sur un seul des détecteurs ($D1_0$) ou ($D2_1$) placé après la seconde lame séparatrice (ST2).

3. Procédé selon revendication 1, **caractérisé en qu'**en présence de deux lames séparatrices (ST1;STE2) placées l'une derrière l'autre dans le passage de la source lumineuse (L), le nombre de photons s'appuyant sur la génération du nombre aléatoire repose sur le fait qu'un nombre aléatoire n'est généré que si, pendant le temps de mesure donné, au moins un photon est enregistré sur le détecteur (DT) de la première lame séparatrice (ST1) et au moins un photon sur un seul des détecteurs ($D1_0$) ou ($D2_1$) placé après la seconde lame séparatrice (ST2).

4. Procédé selon revendication 1, **caractérisé en ce que** le schéma de photons est calculé mathématiquement pour le cas où plus de deux lames séparatrices asservies sont placées dans le passage entre la source lumineuse (L) et la lame séparatrice (ST2), **en ce qu'**un nombre aléatoire n'est généré que si un essaim de photons avec un nombre défini de photons défini par le schéma de photons donné, apparaît sur les détecteurs de la lame séparatrice (ST2) et les détecteurs asservis de la lame séparatrice asservie supplémentaire.

5. Disposition pour la génération de séquences binaires de nombres aléatoires englobant

   - une source lumineuse configurée comme une source de photons,
   - une lame séparatrice, placée après la source lumineuse, comportant deux détecteurs placés après la lame séparatrice et
   - un dispositif de détection destiné à la génération de nombres aléatoires, constitué d'un compteur et d'un calculateur et placé après les détecteurs,

   la source de photons utilisée étant une source lumineuse (L) de faible puissance d'où peuvent sortir, selon le principe de randomisation, aussi bien des photons isolés que des essaims de photons, au moins une autre lame séparatrice, de préférence une lame séparatrice asservie (ST1) étant placée dans le passage entre la source lumineuse (L) et la lame séparatrice (ST2) placée dans le passage de la source lumineuse (L), autre lame séparatrice qui est reliée au dispositif de détection (E) au moyen d'un détecteur, de préférence un détecteur asservi (DT).

6. Disposition selon revendication 5, **caractérisée en ce qu'**on utilise, comme source lumineuse (L) un laser affaibli.

7. Disposition selon revendication 5, **caractérisée en ce qu'**on utilise, comme source lumineuse (L) une source lumineuse thermique.

8. Disposition selon revendication 5, **caractérisée en ce qu'**on utilise, comme source lumineuse (L) une lampe spectrale.

9. Disposition selon revendication 5, **caractérisée en ce qu'**on utilise, comme source lumineuse (L) une diode lumineuse.

10. Disposition selon revendication 4, **caractérisée en ce qu'**on utilise, comme source lumineuse (L) une source lumineuse à section variable.

Fig. 1

EP 0 997 000 B1